# EUROPEAN PATENT SPECIFICATION

(11) **EP 2 842 150 B1**
(45) Date of publication and mention of the grant of the patent: **01.06.2016**
(21) Application number: 13718310.9
(22) Date of filing: 11.04.2013
(51) Int. Cl.: H01H 31/04, H01H 1/38, H02B 13/035, H02B 13/075, H01H 33/42, H01H 33/02, H01H 31/00, H01H 31/24

(54) **ISOLATING/GROUNDING SWITCH WITH THREE PHASES IN ONE ENCLOSURE**
ISOLIERUNGS-/ERDUNGSSCHALTER MIT DREI PHASEN IN EINER KAMMER
COMMUTATEUR D'ISOLATION/MISE À LA TERRE À TROIS PHASES EN UN SEUL BOÎTIER

(30) Priority: 28.04.2012 CN 201210135013
(43) Date of publication of application: 04.03.2015
(73) Proprietor: Siemens Aktiengesellschaft, 80333 München (DE)
(72) Inventor: CHEN, Yan Ping, Shanghai 200245 (CN)
(74) Representative: Isarpatent
(86) International application number: PCT/EP2013/057553
(87) International publication number: WO 2013/160115

(56) References cited:
- EP-A1- 1 128 509
- EP-A2- 0 824 264
- EP-A2- 1 845 540
- WO-A1-01/33593
- WO-A1-99/52186
- WO-A1-2006/131560

## Description

### Technical field

The present invention relates to an isolating/grounding switch with three phases in one enclosure, in particular to an isolating/grounding switch with three phases in one enclosure for a metal-enclosed gas-insulated switch device.

### Background art

In a metal-enclosed gas-insulated switch device, an isolation function and a grounding function, and three operational positions, namely a connected position, an isolated position and a grounded position, are generally realized by opening and closing an isolating/grounding switch. These isolating/grounding switches can be broadly divided into two types, rotational and straight-moving. Of these, the rotational type is restricted by the manner of contact, and so the nominal current that it is capable of carrying is lower, while the electrical performance thereof is poorer. As a result, most high-load metal-enclosed gas-insulated switch devices employ straight-moving isolating/grounding switches. Chinese utility model 200820032556 has disclosed a straight-moving isolating/grounding switch of this type. Compared to the rotational type, the straight-moving type occupies more space. In addition, the three phase conductors must be joined as one in the isolating/grounding switch to achieve coordination with the drive mechanism, while it is also necessary to subject the housing to deformation processing in order that the various contacts are arranged in a straight line to accomplish switching.

WO2006/131560 A1 discloses an isolating/grounding switch according to the preamble of claim 1.

Content of the invention

The object of the present invention is to provide an isolating/grounding switch with three phases in one enclosure, which has a simple conductor shape and a higher space utilization rate. Such an isolating/grounding switch with three phases in one enclosure comprises a housing, three first conductors and three second conductors. The switch also comprises three first static contacts each connected to one of the first conductors, three second static contacts each connected to one of the second conductors, three moving contacts connected by an insulator, and three grounding contacts electrically connected to the housing. Each of the first static contacts and a corresponding one of the first conductors have the same axis as a corresponding one of the second static contacts and a corresponding one of the second conductors. Each of the moving contacts can slide on a corresponding one of the first conductors and is electrically connected to this first conductor. Each of the moving contacts is electrically connected to a corresponding one of the second static contacts when at one end of a corresponding one of the first conductors, and electrically connected to a corresponding one of the grounding contacts when at the other end of this first conductor. By establishing a direct electrical connection between each first static contact and a corresponding second static contact, there is no longer a need to join three conductors as one, and so a simple conductor shape and a higher space utilization rate are achieved. As a result of each of the first static contacts and a corresponding one of the first conductors having the same axis as a corresponding one of the second static contacts and a corresponding one of the second conductors, an electrical connection between the grounding contacts and the housing can be established simply, so that there is no need for the housing to undergo deformation processing. The first conductors of the switch of the invention are arranged in a triangle on an insulating disk of the housing. The regular triangular arrangement can utilize space to the greatest extent possible, in order to achieve better insulating properties.

The above solution also allows a driving mechanism to have fewer components, so that the production costs of the switch are reduced while further improving the reliability thereof.

According to one embodiment of the present invention, the first conductors are arranged in a triangle on an insulating disk of the housing. The triangular arrangement helps to increase the space utilization rate and improve the insulating properties of the switch.

According to another embodiment of the present invention, the grounding contacts are three annular grounding contacts, each of the first conductors passing through a corresponding one of the grounding contacts, and the grounding contacts being electrically connected to the housing separately. By providing each of the first conductors with an independent grounding contact and connecting this to the housing, the connection between the grounding contacts and the housing, and the contact between the grounding contacts and the moving contacts, are made more reliable.
According to another embodiment of the present invention, the switch also comprises a crank arm, the crank arm being connected to the insulator and able to drive the moving contacts to slide on the first conductors. The provision of the crank arm helps to achieve the conversion of rotational movement of the driving mechanism to sliding movement of the moving contact in a simple manner.
According to another embodiment of the present invention, the second conductors are arranged in a regular triangle on the insulating disk of the housing, and at least one of the second conductors is bent. The bending of the second conductor helps to guarantee an insulating distance between the first static contacts and the second conductors in a limited space.

According to another embodiment of the present invention, only one of the second conductors is bent. When both the first conductors and the second conductors are arranged in a regular triangle on the insulating disk of the housing, disposing one of the second conductors close to the first conductor and bending the same helps to reduce the number of conductor processing steps and achieve a simpler structure.

According to another embodiment of the present invention, the housing is T-shaped and comprises a horizontal portion and a vertical portion, the first conductors being located in the horizontal portion, and the second conductors being located in the vertical portion.

According to another embodiment of the present invention, the housing is cross-shaped and comprises a horizontal portion and a vertical portion, the first conductors being located in the horizontal portion, and the second conductors being located in the vertical portion.

According to another embodiment of the present invention, the switch also comprises a driving mechanism connected to the crank arm, the driving mechanism being able to drive the crank arm and thereby drive the sliding movement of the moving contacts.

Preferred embodiments will be described below in a clear and easily understandable way with reference to the accompanying drawings, in order to further illustrate the above characteristics, technical features and advantages of the method used in the present invention, and embodiments thereof.

Description of the accompanying drawings
- Fig. 1: shows schematically a partial sectional drawing of the isolating/grounding switch with three phases in one enclosure of the present invention;
- Fig. 2: shows schematically the three first conductors mounted on the insulating disk and corresponding first static contacts in Fig. 1;
- Fig. 3: shows schematically the coordination of the grounding contacts with corresponding first conductors and the housing in Fig. 1;
- Fig. 4: shows schematically the three moving contacts connected by the insulator in Fig. 1;
- Fig. 5: shows schematically the three second conductors mounted on the insulating disk and corresponding second static contacts in Fig. 1;
- Fig. 6: shows schematically the insulator in Fig. 4;
- Fig. 7: shows schematically the crank arm in Fig. 1.

### Explanation of labels

- 1: first conductor
- 11: first static contact
- 2: moving contact
- 3: crank arm
- 4: grounding contact
- 5: second conductor
- 51: second static contact
- 6: insulator
- 7: insulating disk
- 8: housing

### Particular embodiments

In order that the technical features, object and effects of the present invention may be more clearly understood, particular embodiments of the present invention will now be described with reference to the accompanying drawings, in which identical labels indicate identical components or components which are similar in structure but identical in function.

In order that the drawings may appear concise, only those parts which are relevant to the present invention are represented schematically in the drawings; they do not represent the actual structure thereof as a product. In addition, in order to make the drawings appear concise for ease of understanding, in the case of components with the same structure or function, in some drawings only one of these is drawn schematically, or only one is labeled.

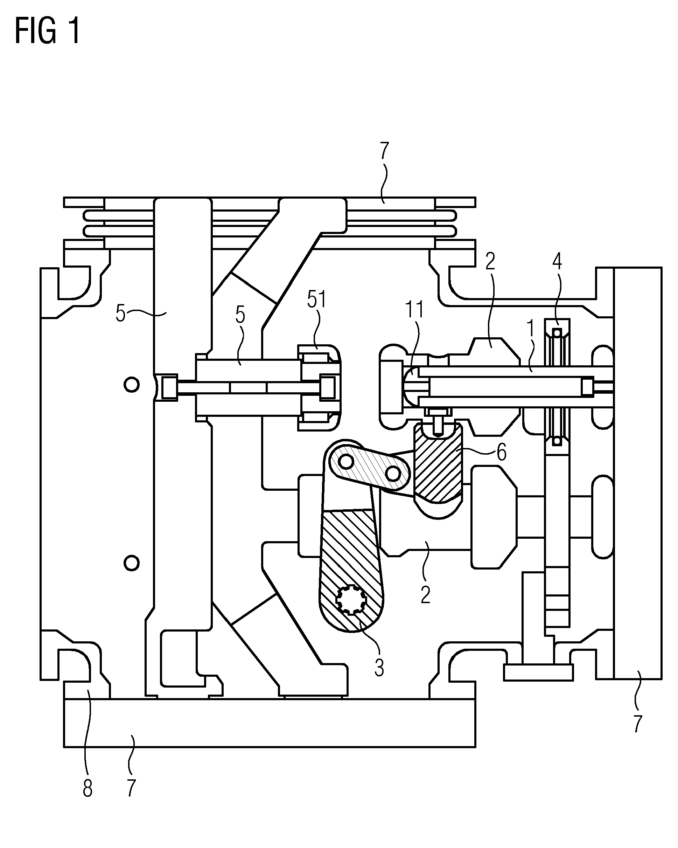

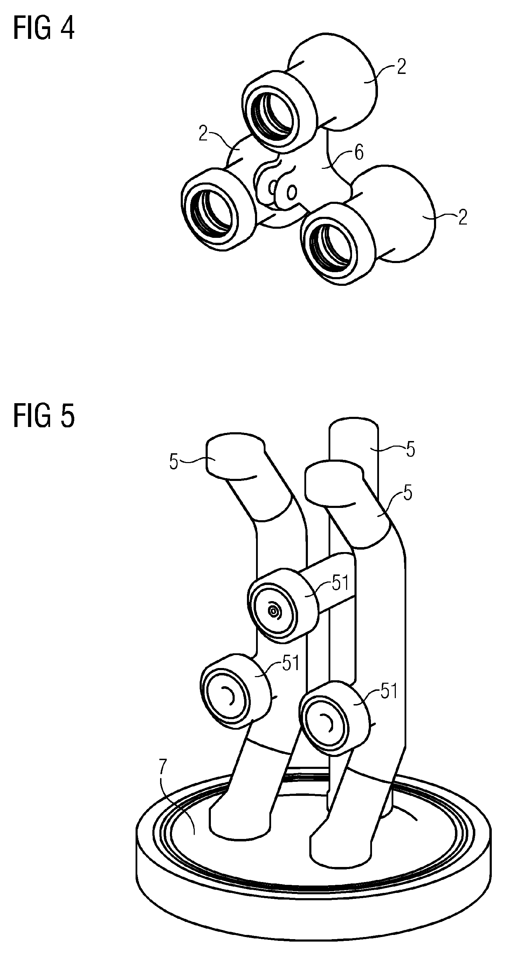

The isolating/grounding switch with three phases in one enclosure of the present invention that is shown schematically in Fig. 1 comprises a housing 8, three first conductors 1 and three second conductors 5. The switch also comprises three first static contacts 11 each connected to one of the first conductors 1, three second static contacts 51 each connected to one of the second conductors 5, three moving contacts 2 connected by an insulator 6 (see Fig. 4), and three grounding contacts 4 electrically connected to the housing 8. As Fig. 1 shows, each first static contact 11 (and corresponding first conductor 1) has the same axis as a corresponding second static contact 51 (and corresponding second conductor 5). Each moving contact 2 can slide on a corresponding first conductor 1 and is electrically connected to this first conductor 1. Each moving contact 2 is electrically connected to a corresponding second static contact 51 when at one end of the corresponding first conductor 1, and electrically connected to a corresponding grounding contact 4 when at the other end of this first conductor 1. The first static contact 11 and first conductor 1 are both made of conductive material, and may be produced separately and subsequently assembled. The electrical connection between the moving contact 2 and the corresponding first conductor 1 is mainly accomplished by direct contact with the first conductor 1.

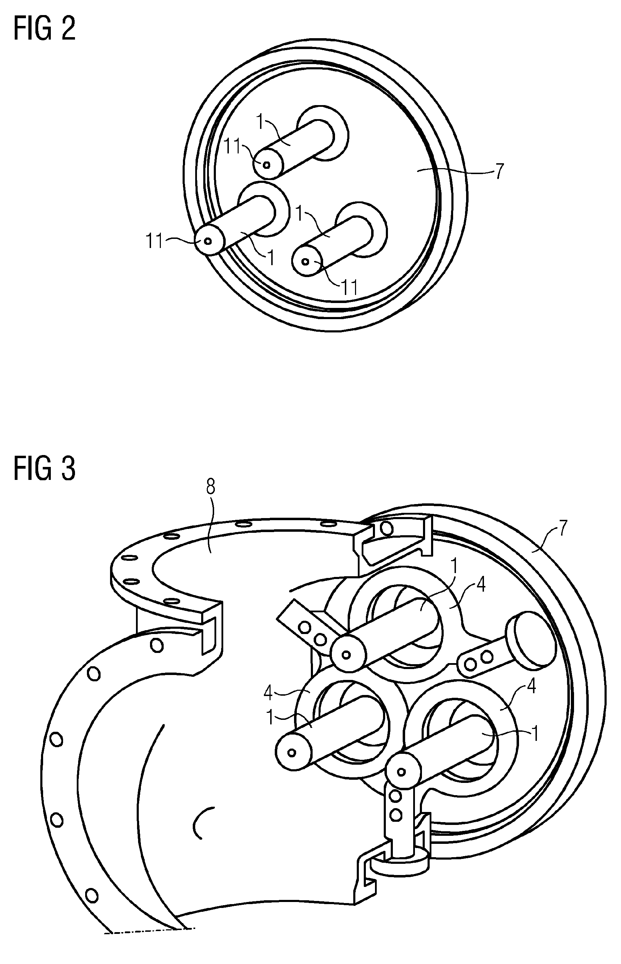

Fig. 2 shows schematically the three first conductors 1 mounted on an insulating disk 7 and corresponding first static contacts 11 in Fig. 1. The three first conductors 1 are preferably arranged in a regular triangle on the insulating disk 7 of the housing 8, as shown in Fig. 2, but may also be arranged in another triangular shape or in a straight line.

Fig. 3 shows schematically the coordination of the grounding contacts 4 with corresponding first conductors 1 and the housing 8 in Fig. 1, wherein the grounding contacts are three annular grounding contacts 4, each first conductor 1 passes through a corresponding grounding contact 4, and the grounding contacts 4 are electrically connected to the housing 8 separately.

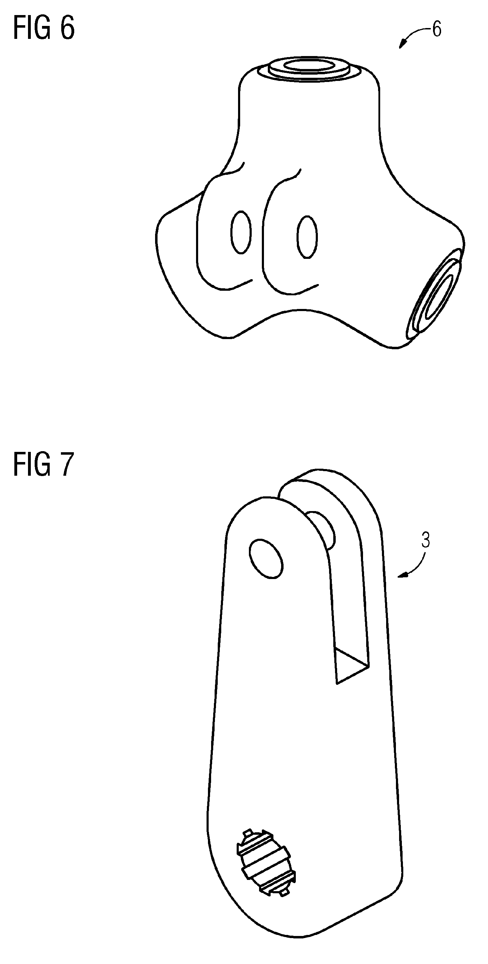

Fig. 4 shows schematically the three moving contacts 2 connected by the insulator 6 in Fig. 1, Fig. 6 shows schematically the insulator 6 in Fig. 4, and Fig. 7 shows schematically a crank arm 3 connected to the insulator 6 in Fig. 1, wherein the crank arm 3 can drive the moving contacts 2 to slide on the first conductors 1.

Fig. 5 shows schematically the three second conductors 5 mounted on the insulating disk 7 and corresponding second static contacts 51 in Fig. 1, wherein the three second conductors 5 are arranged in a regular triangle on the insulating disk 7 of the housing 8, and when two of the three second conductors 5 are disposed close to corresponding first conductors 1 at equal distances, respectively, these two second conductors 5 are bent. According to one embodiment which is not shown, when both the three first conductors 1 and the three second conductors 5 are arranged in a regular triangle on the insulating disk 7 of the housing 8, only one of the second conductors 5 is disposed close to the first conductor 1, and bending this single second conductor 5 helps to reduce the number of conductor processing steps and achieve a simpler structure.

As Fig. 1 shows, the housing 8 may be T-shaped or cross-shaped as required, and comprises a horizontal portion and a vertical portion, wherein the first conductors 1 are located in the horizontal portion, while the second conductors 5 are located in the vertical portion. In addition, the switch may also comprise a driving mechanism connected to the crank arm 3, the driving mechanism being able to drive the crank arm 3 and thereby drive the sliding movement of the moving contacts 2.

The series of detailed illustrations set forth above are merely specific illustrations of feasible embodiments of the present invention, and are by no means intended to limit the scope of protection of the present invention as defined by the claims.

## Claims

1. An isolating/grounding switch with three phases in one enclosure, comprising a housing (8), three first conductors (1) and three second conductors (5), whereas the switch also comprises three first static contacts (11) each connected to one of the first conductors (1), three second static contacts (51) each connected to one of the second conductors (5), and three grounding contacts (4) electrically connected to the housing (8), wherein each of the first static contacts (11) and a corresponding one of the first conductors (1) have the same axis as a corresponding one of the second static contacts (51) and a corresponding one of the second conductors (5); each of the moving contacts (2) can slide on a corresponding one of the first conductors (1) and is electrically connected to this first conductor (1); each of the moving contacts (2) is electrically connected to a corresponding one of the second static contacts (51) when at one end of a corresponding one of the first conductors (1), and electrically connected to a corresponding one of the grounding contacts (4) when at the other end of this first conductor (1), **characterized in that** the isolating/grounding switch further comprises three moving contacts connected by an insulator and **in that** the first conductors (1) are arranged in a triangle on an insulating disk (7) of the housing (8).

2. The isolating/grounding switch with three phases in one enclosure as claimed in claim 1, wherein the first conductors (1) are arranged in a regular triangle on the insulating disk (7) of the housing (8).

3. The isolating/grounding switch with three phases in one enclosure as claimed in claim 1, wherein the grounding contacts are three annular grounding contacts (4), each of the first conductors (1) passing through a corresponding one of the grounding contacts (4), and the grounding contacts (4) being electrically connected to the housing (8) separately.

4. The isolating/grounding switch with three phases in one enclosure as claimed in claim 1, wherein the switch also comprises a crank arm (3), the crank arm (3) being connected to the insulator (6) and able to drive the moving contacts (2) to slide on the first conductors (1).

5. The isolating/grounding switch with three phases in one enclosure as claimed in claim 2, wherein the second conductors (5) are arranged in a regular triangle on the insulating disk (7) of the housing (8), and at least one of the second conductors (5) is bent.

6. The isolating/grounding switch with three phases in one enclosure as claimed in claim 5, wherein only one of the second conductors (5) is bent.

7. The isolating/grounding switch with three phases in one enclosure as claimed in claim 1, wherein the housing (8) is T-shaped and comprises a horizontal portion and a vertical portion, the first conductors (1) being located in the horizontal portion, and the second conductors (5) being located in the vertical portion.

8. The isolating/grounding switch with three phases in one enclosure as claimed in claim 1, wherein the housing (8) is cross-shaped and comprises a horizontal portion and a vertical portion, the first conductors (1) being located in the horizontal portion, and the second conductors (5) being located in the vertical portion.

9. The isolating/grounding switch with three phases in one enclosure as claimed in any one of the above claims, wherein the switch also comprises a driving mechanism connected to the crank arm (3), the driving mechanism being able to drive the crank arm (3) and thereby drive the sliding movement of the moving contacts (2).

## Patentansprüche

1. Isolierungs-/Erdungsschalter mit drei Phasen in einer Kammer, der ein Gehäuse (8), drei erste Leiter (1) und drei zweite Leiter (5) aufweist, wobei der Schalter auch drei erste statische Kontakte (11), die jeweils mit einem von den ersten Leitern (1) verbunden sind, drei zweite statische Kontakte (51), die jeweils mit einem von den zweiten Leitern (5) verbunden sind, und drei Erdungskontakte (4) aufweist, die elektrisch mit dem Gehäuse (8) verbunden sind, wobei jeder von den ersten statischen Kontakten (11) und ein entsprechender von den ersten Leitern (1) die gleiche Achse aufweisen wie ein entsprechender von den zweiten statischen Kontakten (51) und ein entsprechender von den zweiten Leitern (5); wobei jeder der beweglichen Kontakte (2) auf einem entsprechenden von den ersten Leitern (1) verschoben werden kann und elektrisch mit diesem ersten Leiter (1) verbunden ist; wobei jeder von den beweglichen Kontakten (2) elektrisch mit einem entsprechenden von den zweiten statischen Kontakten (51) verbunden ist, wenn er sich an einem Ende von einem entsprechenden von den ersten Leitern (1) befindet, und elektrisch mit einem entsprechenden von den Erdungskontakten (4) verbunden ist, wenn er sich am anderen Ende dieses ersten Leiters (1) befindet, **dadurch gekennzeichnet, dass** der Isolierungs-/Erdungsschalter ferner drei bewegliche Kontakte aufweist, die durch einen Isolator verbunden sind, und dadurch, dass die ersten Leiter (1) in einem Dreieck auf einer Isolierscheibe (7) des Gehäuses (8) angeordnet sind.

2. Isolierungs-/Erdungsschalter mit drei Phasen in einer Kammer nach Anspruch 1, wobei die ersten Leiter (1) in einem gleichschenkligen Dreieck auf der Isolierscheibe (7) des Gehäuses (8) angeordnet sind.

3. Isolierungs-/Erdungsschalter mit drei Phasen in einer Kammer nach Anspruch 1, wobei die Erdungskontakte drei ringförmige Erdungskontakte (4) sind, wobei jeder von den ersten Leitern (1) einen entsprechenden von den Erdungskontakten (4) durchquert und die Erdungskontakte (4) getrennt elektrisch mit dem Gehäuse (8) verbunden sind.

4. Isolierungs-/Erdungsschalter mit drei Phasen in einer Kammer nach Anspruch 1, wobei der Schalter auch einen Kurbelarm (3) aufweist, wobei der Kurbelarm (3) mit dem Isolator (6) verbunden ist und in der Lage ist, die beweglichen Kontakte (2) anzutreiben, um sich auf den ersten Leitern (1) zu verschieben.

5. Isolierungs-/Erdungsschalter mit drei Phasen in einer Kammer nach Anspruch 2, wobei die zweiten Leiter (5) in einem gleichschenkligen Dreieck auf der Isolierscheibe (7) des Gehäuses (8) angeordnet sind und mindestens einer von den zweiten Leitern (5) gebogen ist.

6. Isolierungs-/Erdungsschalter mit drei Phasen in einer Kammer nach Anspruch 5, wobei lediglich einer der zweiten Leiter (5) gebogen ist.

7. Isolierungs-/Erdungsschalter mit drei Phasen in einer Kammer nach Anspruch 1, wobei das Gehäuse (8) T-förmig ist und einen horizontalen Abschnitt und einen vertikalen Abschnitt aufweist, wobei die ersten Leiter (1) sich in dem horizontalen Abschnitt befinden und die zweiten Leiter (5) sich in dem vertikalen Abschnitt befinden.

8. Isolierungs-/Erdungsschalter mit drei Phasen in einer Kammer nach Anspruch 1, wobei das Gehäuse (8) kreuzförmig ist und einen horizontalen Abschnitt und einen vertikalen Abschnitt aufweist, wobei die ersten Leiter (1) sich in dem horizontalen Abschnitt befinden und die zweiten Leiter (5) sich in dem vertikalen Abschnitt befinden.

9. Isolierungs-/Erdungsschalter mit drei Phasen in einer Kammer nach einem der vorhergehenden Ansprüche, wobei der Schalter auch einen Antriebsmechanismus aufweist, der mit dem Kurbelarm (3) verbunden ist, wobei der Antriebsmechanismus in der Lage ist, den Kurbelarm (3) anzutreiben und dadurch die Verschiebungsbewegung der beweglichen Kontakte (2) anzutreiben.

## Revendications

1. Commutateur d'isolation/de mise à la terre à trois phases en un seul boîtier, comportant une enceinte (8), trois premiers conducteurs (1) et trois deuxièmes conducteurs (5), le commutateur comportant également trois premiers contacts statiques (11) dont chacun est relié à un des premiers conducteurs (1), trois deuxièmes contacts statiques (51) dont chacun est relié à un des deuxièmes conducteurs (5), et trois contacts (4) de mise à la terre relié électriquement à l'enceinte (8), chacun des premiers contacts statiques (11) et un conducteur correspondant parmi les premiers conducteurs (1) ayant le même axe qu'un contact correspondant parmi les deuxièmes contacts statiques (51) et un conducteur correspondant parmi les deuxièmes conducteurs (5) ; chacun des contacts mobiles (2) pouvant coulisser sur un conducteur correspondant parmi les premiers conducteurs (1) et étant relié électriquement à ce premier conducteur (1) ; chacun des contacts mobiles (2) étant relié électriquement à un contact correspondant parmi les deuxièmes contacts statiques (51) lorsqu'il se trouve à une extrémité de un correspondant parmi les premiers conducteurs (1), et relié électriquement à un contact correspondant parmi les contacts (4) de mise à la terre lorsqu'il se trouve à l'autre extrémité de ce premier conducteur (1), **caractérisé en ce que** le commutateur d'isolation/de mise à la terre comporte en outre trois contacts mobiles reliés par un isolateur et **en ce que** les premiers conducteurs (1) sont disposés en triangle sur un disque (7) d'isolation de l'enceinte (8).

2. Commutateur d'isolation/mise à la terre à trois phases en un seul boîtier selon la revendication 1, les premiers conducteurs (1) étant disposés suivant un triangle régulier sur le disque (7) d'isolation de l'enceinte (8).

3. Commutateur d'isolation/mise à la terre à trois phases en un seul boîtier selon la revendication 1, les contacts de mise à la terre étant trois contacts annulaires (4) de mise à la terre, chacun des premiers conducteurs (1) passant à travers un contact correspondant parmi les contacts (4) de mise à la terre, et les contacts (4) de mise à la terre étant reliés électriquement à l'enceinte (8) séparément.

4. Commutateur d'isolation/mise à la terre à trois phases en un seul boîtier selon la revendication 1, le commutateur comportant également un maneton (3), le maneton (3) étant relié à l'isolateur (6) et capable d'entraîner les contacts mobiles (2) en translation sur les premiers conducteurs (1).

5. Commutateur d'isolation/mise à la terre à trois phases en un seul boîtier selon la revendication 2, les deuxièmes conducteurs (5) étant disposés suivant un triangle régulier sur le disque (7) d'isolation de l'enceinte (8), et au moins un des deuxièmes conducteurs (5) étant coudé.

6. Commutateur d'isolation/mise à la terre à trois phases en un seul boîtier selon la revendication 5, un seul des deuxièmes conducteurs (5) étant coudé.

7. Commutateur d'isolation/mise à la terre à trois phases en un seul boîtier selon la revendication 1, l'enceinte (8) présentant la forme d'un T et comportant une partie horizontale et une partie verticale, les premiers conducteurs (1) étant situés dans la partie horizontale et les deuxièmes conducteurs (5) étant situés dans la partie verticale.

8. Commutateur d'isolation/mise à la terre à trois phases en un seul boîtier selon la revendication 1, l'enceinte (8) présentant la forme d'une croix et comportant une partie horizontale et une partie verticale, les premiers conducteurs (1) étant situés dans la partie horizontale et les deuxièmes conducteurs (5) étant situés dans la partie verticale.

9. Commutateur d'isolation/de mise à la terre à trois phases en un seul boîtier selon l'une quelconque des revendications ci-dessus, le commutateur comportant également un mécanisme d'entraînement relié au maneton (3), le mécanisme d'entraînement étant capable d'entraîner le maneton (3) et d'engendrer ainsi le mouvement coulissant des contacts mobiles (2).
